# EUROPEAN PATENT APPLICATION

(11) **EP 1 954 007 A1**
(43) Date of publication of application: **06.08.2008**
(21) Application number: 07003550.6
(22) Date of filing: 21.02.2007
(51) Int. Cl.: H04L 29/08, H04L 29/06

(54) **Method and system for processing network communication**

(30) Priority: 02.02.2007 EP 07002253
(71) Applicant: Koninklijke KPN N.V., 2516 CK The Hague (NL)
(72) Inventor: Keyzer, Herman, 9727 DN Groningen (NL)
(74) Representative: Wuyts, Koenraad Maria

(57) **Abstract**

In a network communication system passing communication packets are monitored to detect whether a packet or a combination of packets is received from a network that meets a predetermined condition. In response to detection a signal is generated to an application layer that processes a data stream or messages that are assembled from the packets in processing layers between the application layer and an intermediate layer that detects the condition. Furthermore the packets that led to detection are normally processed by these processing layers. Thus an additional signal is provided from information at the packet level for controlling operation in an application layer at a data stream or message level. The additional signal may be provided to the application layer even before data from the related packets arrives at the application layer.

## Description

### Field of the invention

The invention relates to a method of processing communication in a network, a network communication processing system and a network communication processing device.

### Background

It is known implement processing of network communication with processing functions that can be assigned to different processing layers of a set of processing layers in the receiving system. When data is received, it is supplied to the lowest layer, from where results are passed through increasingly higher layers, at least until an application layer is reached. In the lower layers that data is received in the form of communication packets, which typically contain a network address of a destination of the packet, a network address of a source of the packet and payload data in a predetermined format. The data reaches the application layer the data in the form of an unstructured data stream with data derived from successive packets or in the form data messages with a specific format, wherein many messages may each contain data obtained by combining payload data from a plurality of packets. Before the message or a stream is delivered the layers below the application layer may have performed actions such as error correction, re-ordering of packets, retry of reception of missing packets etc.
The layers may include a layer that comprises a firewall to protect the higher layers against undesirable communication from the network. A firewall serves to block packets with selected destinations from selected sources, or at least to ask a user whether such packets should be blocked. Blocked packets are not passed to higher layers, so that they are not used to construct messages or a data stream for the application layer. The behavior of known firewalls is ultimately limited to blocking or not blocking packets. This is essential for firewalls.
Outside the context of firewalls a more differentiated way of processing communication is possible when event driven programs are used in the application layer. In this case different messages can be used to generate different types of event, which are handled in different ways by the application layer. However, many existing application programs do not provide for event driven processing, or provide only for a small number of different event types, which limits the possibility of differentiating the response. Moreover, the events are generally message based, so that they can only be generated in the application layer or the layer next below. This also limits the number of different event types.

### Summary

Among others it is an object to provide for a method, system and device for processing communication through a network wherein an improved response to data packets is possible by an application layer that processes message composed using the data packets.

According to one aspect a method according to claim 1 is provided. Herein communication packets are monitored to detect whether a packet or a combination of packets is received from a network that meets a predetermined condition. In response to detection a signal is generated to an application layer that processes a data stream or messages that are assembled from the packets in processing layers between a layer that detects the condition and the application layer. Furthermore the packets that led to detection are normally processed by these processing layers. Thus an additional signal is provided from information at the packet level for controlling operation in an application layer at a data stream or message level. The additional signal may be provided to the application layer even before data from the related packets arrives at the application layer.
In an embodiment the generated signal is generated by generating additional packets and adding these packets to the received packets, the additional packets being designed to give rise to an additional message at the application layer. Thus, for example, when the application layer comprises an e-mail reading program an additional e-mail can be create, containing warning information or help about the detected condition. In this way application layer programs that are incapable of handling special events can be made to respond to detected conditions at the packet level.
In another embodiment a control program is used in the application layer to control execution of an application program in the application layer. In this case the messages about the condition may be supplied to the control program under control of the application program, to enable it to adapt control of the application program dependent on the message, for example by starting, stopping or suspending the application program.
In an embodiment predetermined condition depends on a combination of a plurality of packets. Also the predetermined condition may depend on the payload data of packets.
A similar method may be used for outgoing packets based on data from the application layer.

### Brief description of the figures

These and other objects and advantageous aspects will become apparent from a description of exemplary embodiments using the following figures.
- Figures 1 and 2: show communication systems
- Figure 3: shows a signaling diagram

### Detailed description of exemplary embodiments

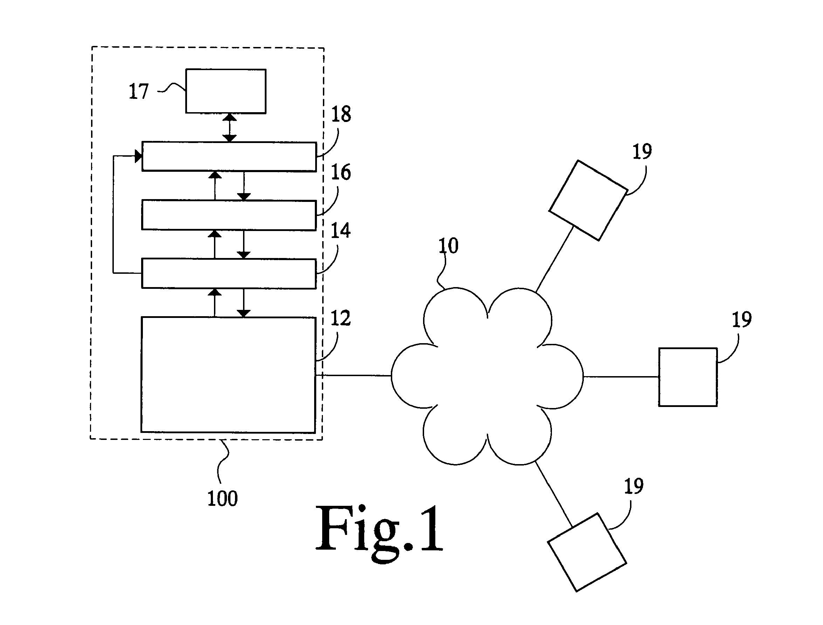

Figure 1 shows a communication system comprising a network 10 (for example the Internet) and a receiver/transmitter system 100 and a number of further systems 19 coupled to each other via network 10. Receiver/transmitter system 100 comprises a network interface 12, a memory 17 and a plurality of processing layers 14, 16, 18 which are successively coupled to one another with interfaces that provide for mutual communication. The layers comprise a top layer 18, which is called the application layer 18. Application layer 18 is in communication with memory 17. The interface 12 is coupled to network 10. The interface may comprise one or more further layers. An intermediate layer 14 has an event signaling output coupled to application layer 18.

It should be understood that the different processing layers 14, 16, 18 may correspond to respective different hardware devices, which may be hardwired or programmed to perform the functions of respective ones of the layers, and which may communicate through internal networks. Alternatively two or more of the layers may correspond to different program parts executed by the same hardware device. Processing layers refer to implementations of functions that at least communicate with each other successively according to the order of the processing layers. As used herein, the "application layer" refers to an implementation of a function or a collection of functions, preferably in the form of a computer executing one or more application programs, wherein the function or at least one of the functions communicates with lower layers and the functions in the application may communicate with each other without going through successive ones of the processing layers.

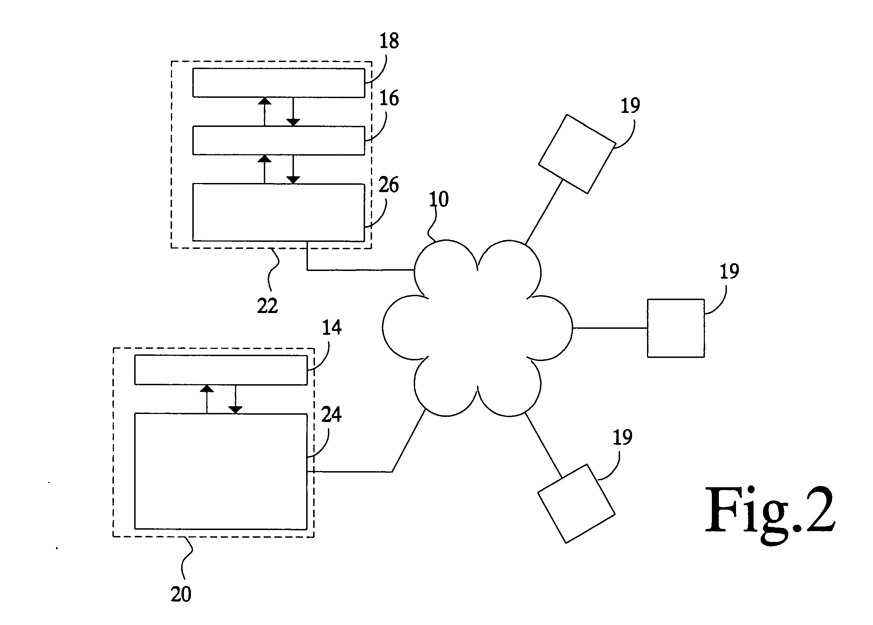

Figure 2 shows an embodiment with a separate first and second receiver/transmitter systems 20, 22 coupled via network 10. Here intermediate layer 14 is implemented in a first receiver/transmitter system 20 together with a lower layer 16 and an interface 24 that may contain further lower layers. The application layer 28 is implemented in second receiver/transmitter system 20, together with an interface 26 that may contain lower layers 26.

In operation information is communicated between further systems 19 and application layer 18. At the level of network 10 the information is contained in transmitted packets that include payload data and a header containing for example a destination address of the packet, a source address. In principle the information may be sent from further systems 19 to application layer 18 and vice versa. Application layer 18 comprises a program, such as an e-mail management program, that receives and processes messages and/or generates and transmits messages, or a program that receives or transmits a stream of data.

The case of transmission to application layer 18 will be discussed first. When a packet arrives from network 10 at receiver/transmitter system 100 in the embodiment of figure 1 information from the packet is successively processed, and passed in processed form, or passed as is, by the interface 12 and successive layers 14, 16 until it is delivered to application layer 18 in the form of a message or a data stream. Processing of packets to form a message or data stream may include error detection, error correction or requesting resending of packets, re-ordering successively received packets according to their order of transmission and combining payload data from the packets into a stream or message. Typically layer 16 (or other layers (not shown) between intermediate layer 14 and application layer 18) combines payload data from different packets into the message or into the data stream, without including any, or at least not all, information from header data from all of the packets.

In addition to this intermediate layer 14 monitors the packets to determine whether they meet a predetermined condition, or at least one of a plurality of predetermined conditions. An example of such a condition could be that a packet from a predetermined source is detected. Another example is that at least a predetermined number of packets containing a same content are detected within a predetermined time period. The content may be information identified in the packets as a user name for example, in which the condition may be for example that packets comprising the same use name are detected more than a predetermined number of times. Many other examples of conditions are possible, for example based on detection of predetermined payload data in a packet or combination of payload data in a plurality of packets, or based on addresses in packets.

When intermediate layer 14 detects that the predetermined, packet dependent condition is met, it generates an event signal which is supplied to application layer 18. It should be emphasized that processing of the packet and information from it in the layers between intermediate layer 14 and application layer is not affect or blocked when the condition is met. In addition intermediate layer 14 passes the packet, or data derived from the packet to the next layer 16 for forming normal messages or a data stream for supply to application layer 18.

Application layer 18 may contain an application program, or a combination of application programs that is executed by a computer. In an embodiment the application program, when executed inputs the messages or the data stream and performs a programmed function, such as control of image display on a display screen, or audio generation, with a content dependent on the received message or data stream. In addition the application program receives the event signals from intermediate layer 14 and performs additional actions in response to the event signals. For example, the application program may cause a help text to be displayed in response to an event signal, or the method of processing messages or the data stream may be adapted dependent on the event signal.

It should be appreciated that the event signals are provided in parallel to the normal messages or data stream, without affecting processing of data derived from the packets by the layers that use the data to form the messages or data stream. Thus, existing layers can be used for this purpose. Moreover, the event signals are not delayed in the same way as the normal messages or data stream, which has the effect that the application layer can often process the event signal before data from the corresponding messages has reached the application layer.

In an embodiment an application program is used that has no ability to handle events, or at least no ability to handle event signals generated by intermediate layer 14. In this embodiment intermediate layer 14 may be configured to generate additional data in response to the detection that the condition is met, for example in the form of packets, and intermediate layer 14 supplies the additional data to the next higher layer as part of the normal data (for example packets) that it feeds to the next higher layer to form the messages or the data stream. In the example wherein the application program is an e-mail application program the additional data may be data that forms a locally generated e-mail message with a text for assisting a user. In such an implementation no separate event signal connection is needed between the intermediate layer 14 and the application layer for supplying event signals. In another embodiment the application layer 18 may comprise a combination of an application program and an application control program that controls execution of the application program, for example by starting or terminating instances of execution of the application program. In this embodiment the event signal may be supplied to the application control program and the messages or data stream may be supplied to the application program. Thus, the application control program may control execution of the application program dependent on the event signals.

In another embodiment the application program and the application control program may communicate with memory 17. In this embodiment memory 17 may be used for storing control data for use by the application program. When the application control program receives an event signal, it updates the control data in memory 17 and when the application program executes functions it reads control data from memory 17 and adapts its execution according to the control data. Thus, for example, if the application program is an e-mail server program the control data may identify e-mail accounts and the application control program may write control data to block an e-mail account. Subsequently, when an e-mail is received for or sent from the application program, the application program reads the control data from memory 17 to determine whether the e-mail is from or for an account that is not blocked. If the control data indicates that the account is blocked the application program adapts its operation accordingly.

In the embodiment of figure 2 data packets with information for the application program are first routed to a first system 20 and form there to the second system 22 that contains the application layer 18. In this embodiment intermediate layer 14 is located in the first system 20. Intermediate layer 14 monitors whether the incoming packets meet a predetermined condition, and if so it transmits an event signal in the form of data that is used as payload data for one or more additionally generated packets, which are transmitted from first system 20 to second system 22. The layers in second system 22 process the normal packets and the additional packets that are generated by intermediate layer 14 when the condition was met. The resulting messages or data stream is passed to application layer 18. In application layer 18 an application program or an application control program may use the resulting messages or data stream as described for the embodiment of figure 1.

In an embodiment wherein application layer 18 transmits information to a further system 19, the interface 12 and layers 14, 16, including intermediate layer 14 process or pass the information to form packets for transmission via network 10, with payload data derived from the information from application layer 18. In this embodiment intermediate layer 14 monitors whether the transmitted packets meet a predetermined condition. If so intermediate layer 14 generates an event signal back to application layer 18, as a special signal or in the form of data that results in a message or data stream as described for the case of reception of packets.

In a further embodiment intermediate layer 14 may monitor both incoming and outgoing packets to detect predetermined conditions upon which it generates an event signal. Separate conditions may be used for incoming and outgoing packets. In an embodiment a predetermined condition depends on a combination of an incoming and outgoing packet and optional further incoming and/or outgoing packets. Thus the event signal can be generated when a specific interaction between the application program and a further system 19 is detected.

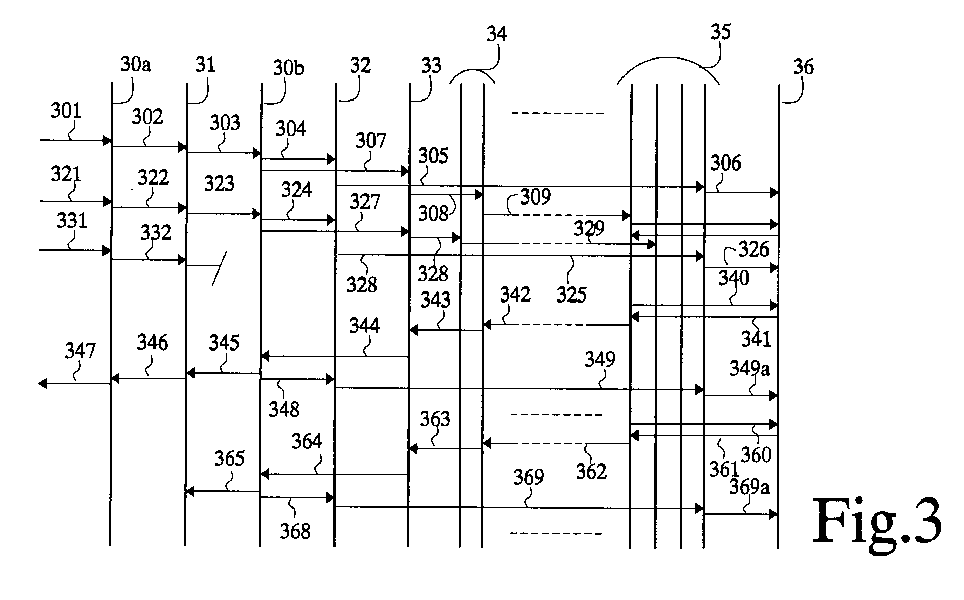

Figure 3 shows a signaling diagram of an embodiment of the invention. Herein a first vertical line 30a symbolizes a network interface 12, a second vertical line 31symbolizes a firewall, a third vertical line 30b symbolizes an intermediate network interface, a fourth vertical line 32 symbolizes processing stages in the above mentioned intermediate layer 14, a fifth vertical line 33 symbolizes processing in a higher layer 16 (or the same layer as intermediate layer 14), a group of vertical lines 34 symbolize processing stages in a yet higher layer, a group of vertical lines 35 symbolize processes in the application layer 18, including target application processes and a control application process. It should be appreciated that a smaller or larger number of layers may be used below the application layer, corresponding to a smaller or larger number of vertical lines as indicated by dashing between groups 34 and 35.

A rightmost vertical line 36 symbolizes memory 17. In an example of an embodiment the memory 17 may store user data of e-mail accounts. In other examples the memory may store a registry of control data for use by application layer processes.

Arrows between the vertical lines symbolize exchange of signals between the elements symbolized by the vertical lines. A first group of arrows 301-309 symbolizes signals exchanged upon reception of a packet at the network interface. An initial signal 301 signals the packet to the network interface. From there a signal 302 signals the packet to the firewall which passes a signal 303 to the intermediate network interface to signal the packet, unless firewall rules cause the packet to be blocked. In an embodiment the intermediate network interface may be implemented in the same device as the network interface, the firewall reading from this device and writing back to it.

From the intermediate network interface a signal 304 is provided to the intermediate layer 14 that monitors packet conditions. If a condition is met the intermediate layer 14 sends an alert signal 305 to a control application process in the application layer 18. It should be appreciated that the condition need not be dependent only on the packet. In an embodiment the intermediate layer 14 may maintain dynamic status information, which it updates when a packet is signaled. In this embodiment the condition may depend on the status information. Thus meeting the condition may depend on previously received packets. In an example, the status information represents packet for the same port received during a predetermined preceding time interval and the condition for generating the alert signal is that there is at a threshold number of such packet. Also the condition may depend on the payload data in the packet.

In response to the alert signal 305 the control application process in the application layer 18 changes the content of the memory 17. In the example wherein the memory 17 stores user data of e-mail accounts the control application process in the application layer 18 may block a user account in response to the alert signal 305. In the example wherein the memory 17 stores a registry containing control data the control application process in the application layer 18 may change the control data. These memory writing actions are symbolized by a signal 306.

In parallel with the signal 304 to intermediate layer 14, the intermediate network interface provides a signal 307 to a processing stage in a higher layer 16 for regular processing of the packet. This in turn may eventually result in a signal 308 to a target application process. Typically, the layers below the target application process assembles messages each from a plurality of packets, or it assembles a quasi-continuous stream of data from the payload data in the packets. As a result a message may not immediately result from the packet, but it may take a number of packets before a message is eventually sent to the target application process.

During processing of the messages or the stream the target application process may consult the memory 17 to determine how to handle the messages or the stream. In the example wherein the memory 17 stores user data of e-mail accounts the target application process may discard an e-mail and return an error message if the destination user account is blocked for example. In the example wherein the memory 17 stores a registry containing control data the target application process in the application layer 18 may process the message dependent on the control data from the memory 17. In this way, the target application process is able to process the messages or stream in a normal way, under influence of conditions detected in the intermediate processing layer 14.

Signals 321-329 show a similar interaction for another packet applied to a different target application process. Signals 331, 332 show an example wherein the firewall blocks a packet. As can be noted the packet and its content are invisible to the target application process in this case. A contrast between the intermediate layer 14 and the firewall is that the intermediate layer 14 does not block packets and instead sends signals to the application layer, to influence processing in the application layer.

Signals 341-349 show an interaction for outgoing packets. Herein a target application process first consults the memory 17 (signals 340, 341) and proceeds under control of results from the memory 17. A message or a section of a stream is sent to lower layers, which results in one or more packet signals 345 via intermediate signals 342, 343. If the firewall passes the packet, it is sent to the network interface with a signal 346 and from there to the network with a signal 347.

Once the packet is in the intermediate network interface, the packet is signaled to the intermediate layer 14 with a signal 348. If a condition is met the intermediate layer 14 sends an alert signal 348 to the control application process in the application layer 18. As in the case of incoming packets it should be appreciated that the condition need not be dependent only on one packet. In response to the alert signal 348 the control application process in the application layer 18 changes the content of the memory 17 (symbolized with a signal 349a). The control application process may be similar to those in the case of incoming packets.

Signals 360-369 show a similar interaction for another message or stream section from a different target application process. By way of example a case has been shown wherein the firewall blocks the outgoing packet.

It should be appreciated that the effect of the alert signals 305, 325 generated in response to a packet need not be limited to application layer processing of data from that packet, or indeed need not affect application layer processing of that packet at all. The operation of the target application processes is modified in general terms, by changing control data in the memory 17, which may have a lasting effect. In the example of figure 3, the change of data in the memory 17 symbolized by signal 306 may affect transmission of unrelated data in signal 342.

In one example the target application process is an e-mail server and the condition is detection that a threshold number of packets with a same request has been received from (or for) the same user within a predetermined time interval. In this case the response may be to block the e-mail account of the user, so that no further messages from (or for) the user will be accepted until further notice.

## Claims

1. A method of processing communication in a network, the method comprising
- receiving communication packets, each with a header and payload data, from the network;
- using a plurality of processing layers to process the packets, the layers including an application layer, a packet processing layer and one or more communication processing layers between the application layer and the packet processing layer, the one or more communication processing layers being configured to process payload data from the packets to form a data stream or messages that each comprise payload data from a plurality of the packets without the headers of all of the plurality of the packets;
- using the application layer to process the data stream or messages;
- monitoring the communication packets in the packet monitoring layer to detect whether a packet or a combination of packets is received that meets a predetermined condition;
- generating a signal from the packet processing layer to the application layer in addition to the data stream or messages based on the packets, when it is detected in the packet processing layer that the packet or a combination of packets is received that meets the predetermined condition.

2. A method according to claim 1, comprising
- using a control program to control execution of an application program in the application layer;
- processing at least part of the messages under control of the application program;
- processing the additional signal in the control program,
- adapting control of the application program under control of the control program dependent on the message.

3. A method according to claim 2, comprising updating control data in a memory from the control program, reading the control data from the control program with the application program during processing of the messages and adapting processing of the messages dependent on the control data.

4. A method according to claim 1, comprising
- processing the data stream or the messages under control of an application program in the application layer;
- generating an additional message in the packet processing layer, the generated signal comprising the additional message;
- inserting the additional message in the stream.

5. A method according to claim 4, wherein the messages are e-mails; the additional signal being an additional e-mail.

6. A method according to any one of the preceding claims, wherein the predetermined condition depends on information from a combination of a plurality of packets.

7. A method according to any one of the preceding claims, wherein the predetermined condition depends on the payload data.

8. A method of processing communication in a network, the method comprising
- producing messages or a data stream from an application layer;
- using a packet processing layer and one or more communication processing layers between the application layer and the packet processing layer, the one or more communication processing layers being configured to process the messages or data stream, to form packets, each with a header and payload data, the payload being derived from the data from the messages or data stream;
- transmitting the packets over the network;
- monitoring the communication packets in the packet processing layer to detect whether a packet or a combination of packets is transmitted that meets a predetermined condition;
- generating a signal from the packet processing layer to the application layer when it is detected that a packet or a combination of packets is transmitted that meets the predetermined condition.

9. A communication processing system comprising an interface for coupling the communication processing system to a network, and a plurality of processing layers, the processing layers comprising a packet processing layer, an application layer and one or more communication processing layers between the packet processing layer and the application layer, wherein
- the packet processing layer is configured to process communication packets received from the network, each with a header and payload data;
- the one or more communication processing layers are configured to process payload data from the packets received from the packet processing layer to form a data stream or messages that each comprise payload data from a plurality of the packets without the headers of all of the plurality of the packets;
- the application layer is configured to process the data stream or messages from the one or more communication layers, wherein the packet processing layer is configured to monitor the communication packets to detect whether a packet or a combination of packets is received that meets a predetermined condition and to generate a signal to the application layer in response to detection that the packet or a combination of packets is received that meets the predetermined condition, while continuing to pass at least payload data from the packets involved in the detection to the one or more communication layers to form the data stream or messages.

10. A communication processing system comprising an interface for coupling the communication processing system to a network, and a plurality of processing layers, the processing layers comprising a packet processing layer, an application layer and one or more communication processing layers between the packet processing layer and the application layer, wherein
- the application layer is configured to generate a data stream or messages;
- the one or more communication processing layers is configured to process the data stream or messages from the application layer to form communication packets to be transmitted over the network, each with a header and payload data, the payload data being derived from the data stream or messages;
- the packet processing layer is configured to process the communication packets from the one or more communication layers and supplying the packets to the interface for transmission, wherein the packet processing layer is configured to monitor the communication packets to detect whether a packet or a combination of packets is transmitted that meets a predetermined condition and to generate a signal to the application layer in response to detection that the packet or a combination of packets is transmitted that meets the predetermined condition, while continuing to supply the packets involved in the detection to the interface for transmission.

11. A computer program product, comprising a program of computer executable instructions, which when executed by a computer cause the computer to monitor the communication packets to detect whether a packet or a combination of packets is received that meets a predetermined condition and to generate a signal to an application layer in response to detection that the packet or a combination of packets is received that meets the predetermined condition, while passing at least payload data from the packets involved in the detection to the application layer via one or more communication processing layers that form a data stream or messages for the application layer.

12. A computer program product, comprising a program of computer executable instructions, which when executed by a computer cause the computer to monitor the communication packets to detect whether a packet or a combination of packets is received that has been by one or more communication processing layers from data from an application layer and which packet or combination of packets meets a predetermined condition, and to generate a signal to the application layer in response to detection that the packet or a combination of packets is received that meets the predetermined condition, while passing the packets involved in the detection for transmission to a network.
